Europäisches Patentamt

European Patent Office

Office européen des brevets

(19)

(11) Publication number : **0 649 223 A1**

(12) **EUROPEAN PATENT APPLICATION**

(21) Application number : **94307533.3**

(22) Date of filing : **13.10.94**

(51) Int. Cl.$^6$ : **H03M 7/30,** G06F 17/10

(30) Priority : **15.10.93 GB 9321367**

(43) Date of publication of application :
**19.04.95 Bulletin 95/16**

(84) Designated Contracting States :
**DE FR GB IT NL**

(71) Applicant : **BRITISH AEROSPACE PUBLIC LIMITED COMPANY**
**Warwick House,**
**P.O. Box 87,**
**Farnborough Aerospace Centre**
**Farnborough, Hants. GU14 6YU (GB)**

(72) Inventor : **Holness, Peter J., British Aerospace Defence Ltd.**
**Six Hills Way,**
**Stevenage**
**Hertfordshire, SG1 2DA (GB)**

(74) Representative : **Potts, Susan Patricia et al**
**British Aerospace plc**
**Lancaster House**
**P.O. Box 87,**
**Farnborough Aerospace Centre**
**Farnborough, Hants. GU14 6YU (GB)**

(54) **Data compression.**

(57) Apparatus for and a method of data compression in which a coded message representing a digital bit stream is transmitted over a low bandwidth transmission link (3) and received by apparatus which includes a calculator (7) operable to create a sequence of output values comprising the calculated result of a generator equation. The output values comprising a digital bit stream may be converted to analogue form by a digital to analogue converter. By clocking the output of the waveform generating apparatus asynchronously, with respect to its inputs, a high level of data compression occurs.

Fig.1.

EP 0 649 223 A1

This invention relates to apparatus for and methods of data compression.

Transmission of large amounts of information requires very large transmission bandwidths. This necessitates the use of costly communication channels for transmission with the consequent increasing demand on available communication bandwidths in both space and terrestrial systems. Also, the storage of large amounts of data requires the use of costly and large storage means.

One object of this invention is to provide a means for reducing the amount of data which it is necessary to store or transmit, hence reducing the load on the associated communications channel or storage means.

According to this invention, data compression apparatus comprises:

means for generating a coded message representing a corresponding digital bit-stream to be generated and for transmitting said coded message over a transmission path, and digital bit-stream-generating means operable to receive said coded message and to generate the corresponding digital bit-stream, in which the digital bit-stream-generating means includes calculator means operable to receive a set of input values which form an argument of a generator equation and to create a sequence of output values, each comprising the calculated result of a generator equation.

The duration and composition of the digital bit-stream may be dictated by the coded message.

If an analogue waveform is required to be generated, then the output of the calculator can be converted to analogue form by the addition of a digital to analogue converter (DAC). The waveshape, frequency and other characteristic parameters of the generated waveform are again controlled by the content of the coded message. The clocking rate of the DAC can be fixed or controlled remotely by means of the coded message.

By clocking the output of the calculator means asynchronously with respect to its inputs, a high level of data compression occurs.

The use of a coded message, as a communications protocol rather than transmitting a complex waveform, greatly reduces the bandwidth requirement of the transmission path. For example, many analogue waveforms can be specified in coded form by a short burst of ASCII bits via a 1200-9600 baud serial databus.

The embodiments of the invention exploit the principle of bit stream generation by which a sequence of output values are created, each value being the calculated result of a generator equation for a specified input value which in turn forms the argument of said generator equation.

Generator equations and their use in waveform generation are described in greater detail in our co-pending European Application EP-A-509,713. Therein, certain generator equations, for example the inverse of a trigonometric function i.e. arccos(sin P) are referred to as "Portmanteau functions". Herein, a Portmanteau function can be any generator equation.

This invention utilises the Portmanteau functions as a data communications protocol, i.e. the coded message has the form of a Portmanteau function or "token" requiring very little bandwidth to transmit. For example, an ascending/descending ramp could be specified by the token: $\pm,P,-1,1,1E5$ with the above five fields as follows:

Polarity (ascending/descending)
Ramp Portmanteau function i.e. y=P
Lower P limit (or "start angle")
upper P limit (or "stop angle")
frequency (100KHz)

Alternatively, the second field could be represented by the Portmanteau Function $y\ (P) = \arctan\left(\tan\dfrac{P}{2}\right)$ using a pre-set number of P values between $-\pi$ and $+\pi$. With the above five field token, an ascending/descending binary stream (from 0 to 255 in decimal form, say) would be generated at the output of the calculator. The rate at which the bit stream could be clocked out of the calculator can be controlled by the coded message (i.e. the fifth field) up to a maximum value set by the capabilities of the calculator means. This upper limit will dictate the bandwidth of the information appearing at the calculator outputs.

Because the rate at which data is clocked out of either the calculator can be set as arbitrarily high as the relvant hardware can manage, vast data compression ratios can be achieved by the present invention. Exact values will, of course, depend on hardware, software and protocols. By making a few assumptions and strictly by way of example, a compression ratio can be calculated as follows:

Assume that a sample token is sent across the transmission path (which might be a wire or a radio link for example) in eighty bits. Suppose the calculating means operates at 2.048 MHz thus producing at its output, digital bit stream sequences 2048 bytes long. Assuming a bus bit precision of 8, the information present at the calculator output is equivalent to:

$$2048 \times 8\ =\ 16384\ \text{bits}$$

The compression ratio is thus

$$\frac{16384}{80} \approx 205:1$$

Some embodiments of the invention will now be described, by way of example only, with reference to the drawings of which:

Figure 1 is a schematic block diagram of an embodiment for switching a logic gate array; and;

Figures 2A and 2B represent logic levels relating to the output of the first embodiment of Figure 1.

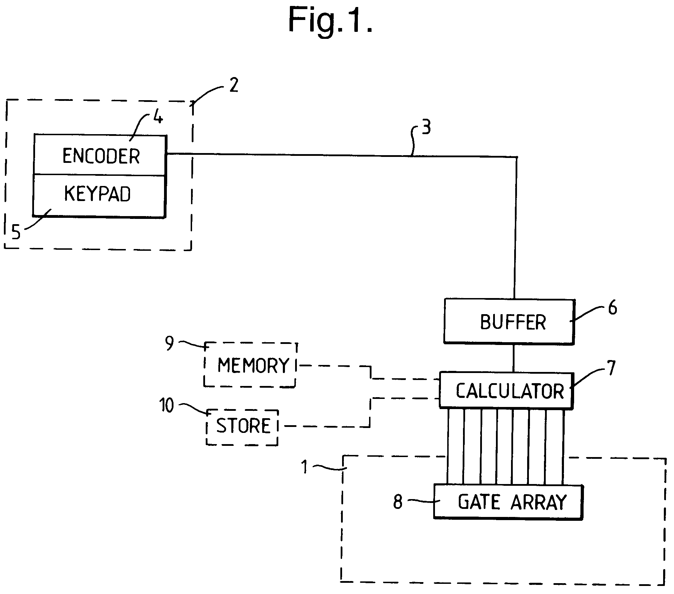

In the example of Figure 1 the invention is used to operate a remote switching circuit 1 which is linked to a control station 2 via a low bandwidth transmission path 3. The transmission path 3 could be a simple electrical conductor, fibre-optic cable, or radio link, for example.

The control station 2 includes an encoder 4 and associated keypad 5. The output from the encoder is linked via the transmission path 3 to a buffer 6 whose output in turn is fed to a calculator 7. The calculator 3 has eight digital output lines which are connected to a logic gate array 8 which forms part of the switching circuit 1.

The keypad 5 is used to type into the encoder 1 a Portmanteau Function, [$y = f(P)$ in the general case] appropriate values of P between pre-chosen limits, and a command setting the clocking rate of the calculator. The encoder 4 converts this received information (which constitutes a coded message) into ASCII form and transmits it over the transmission path 3. The buffer 6 receives the information and processes it into a form which is readable by the calculator. The calculator 7 is pre-programmed with the necessary algorithms for calculating successive values of y for each value of P received via the buffer 6. The calculated values of y are clocked out of the calculator 7 at a rate set by the keypad operator. These values appear as a sequence of numbers, but in binary form (eight bits in this example) at the outputs of the calculator 7 and are used to switch the logic gate array 8.

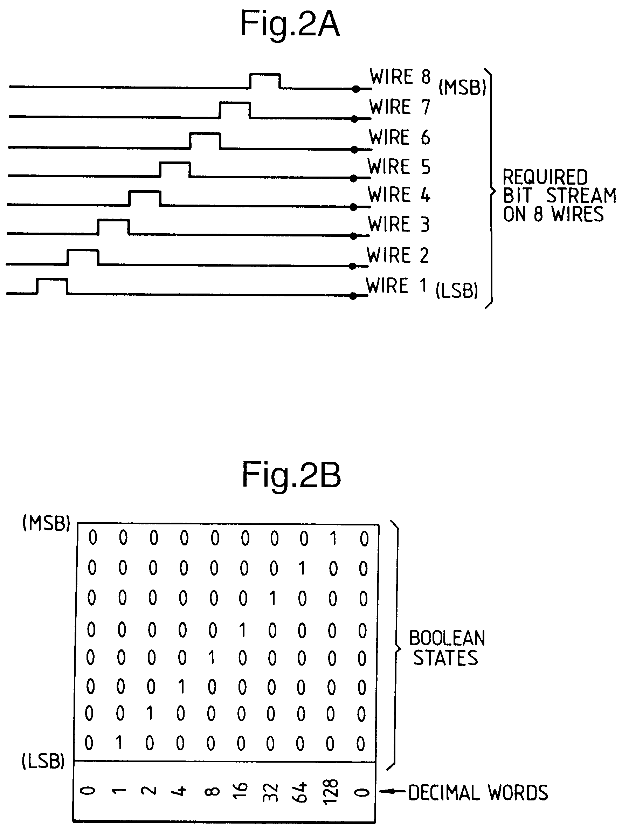

In this specific example, suppose there is a requirement for each gate associated with each of the eight outputs from the calculator to be held at a logic high level in succession, i.e. that the bit streams at each of the eight outputs should be as represented in Figure 2A with the corresponding Boolean states and decimal word values as shown in Figure 2B. Each Boolean state in succession corresponds therefore to the decimal words 0,1,2,4,8,16,32,64 and 128.

This can be achieved by choosing a Portmanteau Function $y = 2^P$ for values of P equalling 0,1,2,3,4,5,6 and 7. Hence the expression for y and values for P are typed via the keypad 5 into the encoder 4 for use by the calculator 7. Subsequently each gate in the array 8 is switched in succession by the action of the calculator 7.

By keying in different generator equations, almost any desired bit stream can be provided at the calculator's outputs.

The above embodiment could be modified by storing the aforesaid P values in a memory 9 to which the calculator has direct access, rather than transmitting them over the transmission path with the generator equation.

Similarly, the Portmanteau Function(s) could be stored in a store 10 to which the calculator has direct access, rather than transmitting the function(s) over the transmission path. In this case the coded message could comprise a store address location so that the calculator could access the appropriate stored function(s).

In further alternative embodiments, the keypad is dispensed with and any relevant information (for instance the Portmanteau Function(s) and P values) is either stored in a memory accessible to the encoder or made available via an on-the-fly buffer/processor.

## Claims

1) Data compression apparatus comprising; means (4), (5) for generating a coded message representing a corresponding digital bit stream to be generated and for transmitting said coded message over said transmission path (3),

and digital bit-stream-generating means (7) operable to receive said coded message and to generate the corresponding digital bit-stream, in which the digital bit-stream generating means includes calculator means (7) operable to receive a set of values which form an argument of a generation equation and to create a sequence of output values, each comprising the calculated result of the generator equation.

2) Data compression apparatus according to claim 1 in which said coded message includes a portion representing a generator equation.

3) Data compression apparatus according to claim 1 and including a store (10) for storing said generator equation.

4) Data compression apparatus according to any preceding claim in which said coded message includes a portion representing a set of values which form the argument of said generator equation.

5) Data compression apparatus according to any of claims 1 to 3 further including a memory (9) for storing a set of values which form the argument of said generator equation.

6) Data compression apparatus according to any preceding claim in which said transmission path comprises a serial databus.

7) Data compression apparatus according to claim 6 in which said coded message is in ASCII form.

8) A method of data compression including the steps of:

generating a coded message representing digital bit stream to be generated;

transmitting said coded message over a transmission path;

receiving said coded message;

and generating said digital bit stream by creating a sequence of output values each comprising the calculated result of a generator equation.

# Fig.1.

# Fig.2A

WIRE 8 (MSB)
WIRE 7
WIRE 6
WIRE 5
WIRE 4
WIRE 3
WIRE 2
WIRE 1 (LSB)

REQUIRED
BIT STREAM
ON 8 WIRES

# Fig.2B

(MSB)

| 0 | 0 | 0 | 0 | 0 | 0 | 0 | 0 | 1 | 0 |
| 0 | 0 | 0 | 0 | 0 | 0 | 0 | 1 | 0 | 0 |
| 0 | 0 | 0 | 0 | 0 | 0 | 1 | 0 | 0 | 0 |
| 0 | 0 | 0 | 0 | 0 | 1 | 0 | 0 | 0 | 0 |
| 0 | 0 | 0 | 0 | 1 | 0 | 0 | 0 | 0 | 0 |
| 0 | 0 | 0 | 1 | 0 | 0 | 0 | 0 | 0 | 0 |
| 0 | 0 | 1 | 0 | 0 | 0 | 0 | 0 | 0 | 0 |
| 0 | 1 | 0 | 0 | 0 | 0 | 0 | 0 | 0 | 0 |

(LSB)

BOOLEAN STATES

| 0 | 1 | 2 | 4 | 8 | 16 | 32 | 64 | 128 | 0 | ← DECIMAL WORDS |

# EUROPEAN SEARCH REPORT

**European Patent Office**

Application Number

## DOCUMENTS CONSIDERED TO BE RELEVANT

EP 94307533.3

| Category | Citation of document with indication, where appropriate, of relevant passages | Relevant to claim | CLASSIFICATION OF THE APPLICATION (Int. Cl. 6) |
|---|---|---|---|
| D,A | EP - A - 0 509 713 (BRITISH AEROSPACE PUBLIC) * Totality * | 1,8 | H 03 M 7/30 G 06 F 17/10 |
| A | US - A - 5 109 437 (HONDA) * Totality * | 1,8 | |
| A | US - A - 4 905 002 (JONES et al.) * Totality * | 1,8 | |

TECHNICAL FIELDS SEARCHED (Int. Cl. 6)

H 03 M 7/00

The present search report has been drawn up for all claims

| Place of search | Date of completion of the search | Examiner |
|---|---|---|
| VIENNA | 29-12-1994 | BAUMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)